Europäisches Patentamt

European Patent Office

Office européen des brevets

(19)

(11) **EP 0 823 883 B1**

(12) **FASCICULE DE BREVET EUROPEEN**

(45) Date de publication et mention
de la délivrance du brevet:
**13.09.2000 Bulletin 2000/37**

(21) Numéro de dépôt: **96919874.6**

(22) Date de dépôt: **06.05.1996**

(51) Int Cl.$^7$: **C01B 31/00**, C06C 15/00,
C06B 43/00, C06D 3/00,
H01M 4/58, B01D 53/00

(86) Numéro de dépôt international:
**PCT/FR96/00687**

(87) Numéro de publication internationale:
**WO 96/34825 (07.11.1996 Gazette 1996/49)**

(54) **COMPOSES D'INTERCALATION, LEUR PROCEDE DE PREPARATION ET LEUR UTILISATION NOTAMMENT EN PYROTECHNIQUE**

EINLAGERUNGSVERBINDUNGEN, VERFAHREN ZU IHRER HERSTELLUNG UND IHRE VERWENDUNG INSBESONDERE IN DER PYROTECHNIK

INTERCALATION COMPOUNDS, METHOD FOR PREPARING THEM AND USE THEREOF, PARTICULARLY IN PYROTECHNICS

(84) Etats contractants désignés:
**DE FR GB IT SE**

(30) Priorité: **05.05.1995 FR 9505398**

(43) Date de publication de la demande:
**18.02.1998 Bulletin 1998/08**

(73) Titulaire: **ETIENNE LACROIX - TOUS ARTIFICES SA**
**31600 Muret (FR)**

(72) Inventeurs:
• **LEICHTER, Geneviève**
**F-31820 Pibrac (FR)**
• **GACHON, Jean-Claude**
**F-54280 Seichamps (FR)**
• **GUERARD, Daniel**
**F-54220 Malzeville (FR)**

(74) Mandataire: **Ahner, Francis**
**CABINET REGIMBEAU**
**26, avenue Kléber**
**75008 Paris (FR)**

(56) Documents cités:
**US-A- 4 756 778**

• **MATERIAL SCIENCE AND ENGINEERING, AUG. 1980, SWITZERLAND, vol. 45, no. 1, ISSN 0025-5416, pages 55-59, XP002011428 BILLAUD D ET AL: "The synthesis and resistivity of the ternary graphite-K-Na compounds"**
• **SYNTHETIC METALS, APRIL 1981, SWITZERLAND, vol. 3, no. 3-4, ISSN 0379-6779, pages 279-288, XP002011429 BILLAUD D ET AL: "Synthesis and resistivity as a function of composition and stage for some ternary intercalation compounds"**
• **DATABASE WPI Section Ch, Week 9423 Derwent Publications Ltd., London, GB; Class E19, AN 94-188092 XP002011432 & JP,A,06 126 165 ( IDEMITSU KOSAN CO LTD) , 10 Mai 1994**
• **JOURNAL OF CHEMICAL PHYSICS, 15 JAN. 1985, USA, vol. 82, no. 2, ISSN 0021-9606, pages 921-926, XP002011430 HARK S K ET AL: "Structure and synthesis of the ternary alkali graphite intercalation compound KCsC16, an ideal layered heterostructure"**
• **MATERIAL SCIENCE AND ENGINEERING, JUNE 1979, SWITZERLAND, vol. 38, no. 3, ISSN 0025-5416, pages 275-283, XP002011431 BASU S ET AL: "Synthesis and properties of lithium-graphite intercalation compounds"**
• **PATENT ABSTRACTS OF JAPAN vol. 018, no. 588 (C-1271), 10 Novembre 1994 & JP,A,06 219719 (YAZAKI CORP;OTHERS: 01), 9 Août 1994,**

**Description**

L'invention a pour objet des nouveaux composés d'intercalation. Elle vise également leur procédé de préparation et leur utilisation notamment en pyrotechnique.

Il est connu de préparer des matériaux aptes à générer suffisamment de chaleur au contact de l'air pour être exploitables en pyrotechnique. La plupart du temps, ces matériaux se présentent sous une forme pulvérulente, et il s'agit surtout de composés inorganiques.

Parmi les composés inorganiques, les alliages et les composés intermétalliques peuvent offrir a priori de bonnes perspectives. Les alliages à base de calcium sont par exemple intéressants : ils sont durs, fragiles, très altérables par l'eau et présentent des températures de fusion exploitables. A titre d'illustration, la température de fusion de $Ca_2Sn$ est de 1120°C et celle de $CaSn_3$, de 627°C.

On peut également citer les alliages calcium-magnésium MgCa ou $Mg_2Ca$ dont des températures de fusion sont respectivement de 517 et 714°C. On peut mentionner encore les alliages calcium-zinc, par exemple ZnCa dont la température de fusion est de 385°C.

Les enthalpies de réaction ($\Delta H$) sont les suivantes, dans l'hypothèse où l'on forme les oxydes selon une réaction du type

$$M_A + M_B + \frac{y + z}{2} O_2 \rightarrow M_A O_y + M_B O_z$$

|  | $\frac{y + z}{2}$ | $\Delta H(kcal.mole^{-1})$ |
|---|---|---|
| $Ca_2Sn$ | 2 | - 442 |
| $CaSn_3$ | 3,5 | - 568 |
| $Mg_2Ca$ | 1,5 | - 449 |
| MgCa | 1 | - 300 |
| ZnCa | 1 | - 235 |

Les alliages à base de sodium et de potassium ont été largement étudiés pour d'éventuelles applications pyrotechniques. On a pu ainsi mettre en évidence que certains de ces alliages, par exemple l'alliage sodium-potassium à 50-80 % de potassium en masse, pouvaient être potentiellement intéressants en pyrotechnique. En effet, certains d'entre eux réagissent en présence d'oxygène ou d'eau avec un fort dégagement de chaleur.

Concernant les composés intermétalliques formés avec le sodium ou le potassium, leur réaction avec l'air est moins violente que lorsque Na ou K sont seuls, ce qui en soi est un point positif.

Le titane forme de très nombreux alliages binaires ou ternaires avec la plupart des éléments de la classification périodique (nouveau traité de Chimie Minérale, Paul PASCAL, MASSON).

Le titane métallique a la propriété de s'oxyder spontanément en présence d'oxygène en dégageant une forte quantité de chaleur.

Par ailleurs, de nombreux travaux ont porté sur l'étude de matériaux coruscatifs (il s'agit de matières combinées intermétalliques, c'est-à-dire qu'après avoir atteint la température de réaction, ces produits sont capables de dégager des quantités d'énergie importantes).

On peut citer par exemple :

| Matière | % en poids | Température d'inflammation (°C) | Température de réaction (°C) | Enthalpie mesurée (J.g$^{-1}$) |
|---|---|---|---|---|
| Ti Sb Pb | 48 23 29 | 570 | 1010 | 1045 |
| Ti Te | 27 73 | 433 | 870 | 815 |

Les brevets WO 089/10340 et US 4 830 931 portent sur des procédés d'activations de surfaces métalliques afin de les rendre pyrophoriques.

Le principe de base est l'attaque de la surface métallique par un mélange d'un métal et de son chlorure, à une température telle que le support reste à l'état solide et que le mélange soit à l'état liquide. La réaction est longue, puisqu'elle dure plusieurs dizaines d'heures.

Le métal ainsi recouvert d'une couche d'intermétallique est ensuite activé par une solution de soude.

Le métal devenu pyrophorique doit alors être stocké dans un liquide peu volatil (exemples : fluoroéthane, nonane, glycérol).

Cependant, la préparation de ces composés est coûteuse et ceux-ci sont donc assez peu exploitables industriellement.

Des composés ayant fait l'objet d'autres études dans ce domaine sont les couples de métaux qui sont en mesure, lorsque la température de réaction est atteinte, de dégager des quantités d'énergie relativement grandes, avec formation d'alliage.

Il est donc nécessaire de transmettre une quantité d'énergie suffisante à ces matériaux pour que la température de fusion de l'un des métaux du couple soit atteinte et que la réaction ait lieu.

On utilise en général des charges explosives.

La réaction exothermique est brève.

Cependant, ces composés sont également coûteux et de ce fait eux aussi peu exploitables industriellement.

Les alliages à base de lithium sont également bien connus. On connaît par exemple leur forte réactivité en présence d'air humide, réactivité abondamment décrite par J.C. Bailar, dans "Comprehensive Inorganic Chemistry", Volume 1, 1973 - 335-37, F.A. Cotton and G. Wilkinson, dans "Advanced Inorganic Chemistry", 1972 - 189-91 et F.E. Wang, M.A. Mitchell, dans "J. Less Common Metals", 1978 - 61, 237.

On note que les composés organométalliques sont souvent écartés des applications pyrotechniques. En effet, ils présentent souvent l'inconvénient de réagir violemment en présence d'eau. Or, la teneur en eau dans l'air dépend essentiellement des conditions météorologiques. On conçoit donc fort bien que le résultat de la mise en contact de ces composés avec l'air soit aléatoire et que, de ce fait, ces composés soient plutôt écartés des applications pyrotechniques.

En réalité, dans ce domaine, on s'intéresse surtout aux composés donnant lieu à des réactions faisant appel à l'oxygène de l'air (éventuellement l'azote), pour garder des performances équivalentes au produit quelles que soient les conditions ambiantes.

Il s'agit de générer de la chaleur dans l'atmosphère en y répandant un produit pulvérulent capable de s'oxyder spontanément. Plus exactement, il s'agit de réchauffer un volume d'air (typiquement 1000 m$^3$) en évitant un pic de température trop élevée (dit "pic thermique").

A ce sujet, des essais ont montré que la plupart des composés inorganiques indiqués ci-dessus présentent surtout les inconvénients suivants :

. leur durée de combustion est trop brève,
. la température atteinte est trop élevée.

En outre, ces composés sont améliorables du point de vue de leurs propriétés intrinsèques, par exemple leur toxicité. Par ailleurs, il serait également souhaitable de mieux maîtriser l'ensemble des valeurs liées à leur réaction avec l'air, à savoir les énergies et les durées de cette réaction.

D'un point de vue pratique, il conviendrait aussi de mettre au point un procédé de fabrication de tels composés qui soit plus simple et plus rapide que ceux qui existent à ce jour.

Certains composés d'intercalation du graphite, à savoir ceux des métaux alcalins lourds, sont connus depuis 1926 [K. FREDENHAGEN, G. CADENBACH, Z. anorg. allgem. Chemie (1926) 158].

Material Science and Engineering, Aug.1980,CH, Vol.45, no.1,ISSN 0025-5416, pages 55-59, Billaud et al., "The Synthesis and Resistivity of the ternary Graphite-K-Na Compounds" et Synthetic Metals, Apr. 1981, CH, Vol.3, no.3,4, ISSN 0379-6779, pages 279-288, Billaud et al., "Synthesis and Resistivity as a Function of Composition and Stage for some ternary Intercalation Compounds" décrivent des composés d'intercalation de K et Na.

Enfin, on peut compléter la description de l'état de la technique par la citation du document US 3 160 670 qui enseigne l'utilisation de KC$_8$ comme catalyseur de réactions chimiques.

L'invention a pour but de fournir un composé présentant les propriétés suivantes :

. il réagit avec l'air de manière instantanée, c'est-à-dire en moins de 0,5 seconde,
. sa durée de combustion avec l'air est supérieure à 5 secondes,
. son pouvoir calorifique est élevé,
. sa résistance au vieillissement est bonne,
. il est non toxique,
. il est élaboré au moyen d'un procédé facilement industrialisable,
. son coût est modéré,
. il ne donne pas lieu à une réaction violente lors de son immersion dans l'eau.

On y parvient selon l'invention, en réalisant un composé d'intercalation de formule globale I

$$Na_x \; K_{1-x} \; Z_y \hspace{4cm} \text{(I)}$$

dans laquelle :

Z   représente du carbone ou un polymère à motif cyclique, en particulier aromatique, notamment un polymère dont le motif de base est $C_6H_4$ ;

   $0 < x < 1$, et
   $2 \leq y \leq 6$,

y   pouvant être entier ou non.

L'invention concerne plus particulièrement les composés de formule I dans laquelle Z représente du carbone.

A priori, la présence d'alcalins laisse présager une réaction instantanée de ces composés avec l'air ; le fait que ces composés soient riches en carbone donne une bonne probabilité de réaction exothermique qui va durer dans le temps.

Les produits de réaction avec l'air peuvent être Na, K et leurs oxydes et C, CO, $CO_2$ et des formes CH, $CH_2$.

Par ailleurs, ces composés sont non toxiques et facilement industrialisables. Ils réagissent spontanément en présence de l'oxygène de l'air ou de certains composés organiques, en dégageant une forte chaleur de réaction.

L'invention concerne encore plus particulièrement les composés d'intercalation de formule I dans laquelle $0,15 \leq x \leq 0,70$.

De tels composés peuvent par exemple être élaborés à partir d'un mélange de sodium et de potassium à une température voisine de 20°C.

De préférence, on choisit y tel que :
   $3 \leq y \leq 5$.

Avantageusement, on choisira, pour ces composés, des quantités de sodium et de potassium correspondant à :
   $0,25 \leq x \leq 0,45$.

De tels composés sont obtenus en mélangeant du sodium et du potassium aux alentours de 0°C, par exemple.

Plus avantageusement, on choisit une valeur de x qui corresponde à une valeur proche de l'eutectique dans le diagramme de phase Na-K.

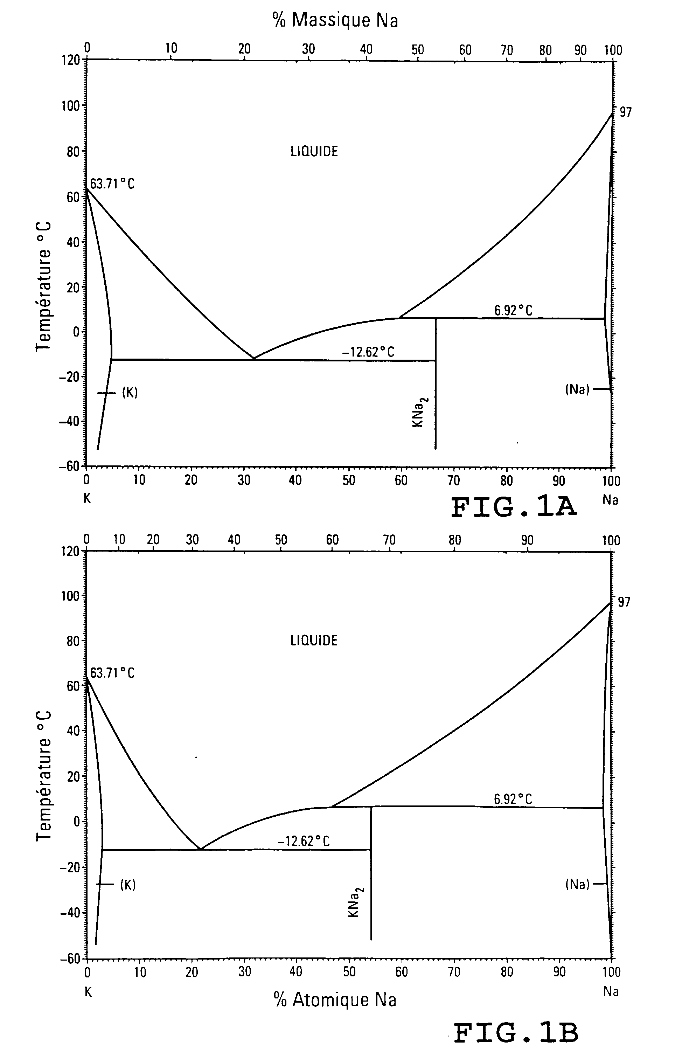

Le diagramme de phase Na-K est représenté sur la figure 1. Il est extrait de l'ouvrage intitulé "Binary Alloy Phase Diagrams" 2nd Ed., Vol. 3, Ed. Thaddeus B. Massalski.

A partir de ce diagramme, on peut déduire notamment que l'eutectique présente une formule brute s'écrivant approximativement $Na_{0,32} \; K_{0,68}$. En d'autres termes, la composition à l'eutectique correspond à x = 0,32 approximativement.

La couleur de ces composés peut varier en fonction des stades d'intercalation du sodium et du potassium dans le carbone entre le jaune, le brun, le bleu ou le noir, avec, dans certains cas, un éclat métallique.

Le carbone se présente avantageusement sous forme de particules de granulométrie comprise entre $10^{-5}$ et 1 mm.

Les performances de ces produits, particulièrement intéressantes en pyrotechnique, sont surtout liées à leur fort potentiel calorifique (entre 4000 et 8000 $J.g^{-1}$) ; ainsi qu'à leur durée de rayonnement tout à fait adaptée à ce type d'application (supérieure à 10 secondes).

Le procédé de préparation d'un composé d'intercalation I selon l'invention comprend :

.   une étape de dégazage de la source carbonée Z, en particulier de carbone,
.   une étape de formation d'un alliage liquide $Na_x \; K_{1-x}$ par mise en contact des métaux Na et K sous forme solide à une température appropriée dictée par le diagramme de phase Na-K, en particulier à température ambiante, et sous atmosphère inerte, et
.   une étape de mise en contact de la source carbonée Z dégazée, en particulier du carbone dégazé, avec l'alliage liquide $Na_x \; K_{1-x}$, de préférence sous agitation, pour obtenir $Na_x \; K_{1-x} \; Z_y$, en particulier $Na_x \; K_{1-x} \; C_y$, sous atmosphère inerte et sans aucun apport extérieur de chaleur.

Il convient donc d'obtenir un alliage liquide à base de sodium et de potassium à une température choisie. Pour cela, on se réfère, en pratique, au diagramme de phase Na-K, par exemple celui reproduit à la figure 1. On met en oeuvre le sodium et le potassium, pour la température choisie, à une concentration telle qu'ils forment un composé liquide.

On a rassemblé, dans le tableau 1 ci-après, à titre indicatif, le pourcentage de sodium à mettre en oeuvre dans le mélange Na-K, pour obtenir un mélange liquide. Les pourcentages sont uniquement donnés approximativement.

Tableau 1

| Température (°C) | Pourcentage en Na |
|---|---|
| 15°C | 21 à 64 |
| 18°C | 18 à 60 |
| 40°C | 9 à 79 |
| 64°C | 0 à 90 |

La réaction se produit de manière instantanée ou au bout de quelques heures, selon la nature de Z et selon la stoechiométrie choisie, à savoir les valeurs de x et de y.

Les mesures effectuées sur des dispositifs appropriés ont montré que ces composés d'intercalation présentaient un potentiel calorifique compris entre 4000 et 8000 $J.g^{-1}$ et une durée de rayonnement supérieure à 10 secondes.

Pour disperser ces composés d'intercalation dans l'air, on utilise une charge de rupture telle que la dispersion du matériau soit instantanée. On peut aussi utiliser un générateur de gaz entraînant le mouvement d'un piston qui éjecte le matériau progressivement sur une trajectoire ou encore générer continûment du matériau à partir d'un récepteur alimenté en surpression.

On peut choisir de former un alliage liquide $Na_x K_{1-x}$ qui corresponde à l'eutectique. Dans cette éventualité, les métaux alcalins Na et K utilisés pour la formation de l'eutectique peuvent se présenter sous la forme de morceaux solides en suspension dans une huile minérale ou organique, le rapport en poids de Na et de K à l'huile étant inférieur à 50 %, le plus souvent compris entre 3 et 20 %.

Si l'on souhaite former l'eutectique, la réaction est élaborée par simple mise en contact sous atmosphère inerte du potassium et du sodium solides. Le carbone provenant par exemple de charbon végétal est dégazé séparément dans le même temps, puis l'alliage peut être versé sur le charbon dégazé. L'ensemble est agité mécaniquement ; la réaction est très rapide et son exothermicité est suffisante pour permettre une bonne homogénéisation du composé.

Dans ce cas, le rapport du carbone sur la composition de l'eutectique de Na et de K peut être ajusté dans d'assez larges limites jusqu'à l'obtention d'un composé formé par le sodium et le potassium dans une stoechiométrie voisine de celle du composé eutectique, la stoechiométrie du carbone étant telle que y est voisin de 2. Ce dernier composé se comporte d'ailleurs encore comme un composé solide, même si chaque particule est entourée d'un film de Na et de K dans la composition de l'eutectique, ce film étant apte à se liquéfier sous l'action d'une forte pression.

De préférence, le carbone utilisé se présente sous forme de granules de diamètre compris entre 1 et 4 mm et de préférence, compris entre 2 et 3 mm.

Selon un mode avantageux de mise en oeuvre du procédé selon l'invention, l'étape de mise en contact du carbone dégazé avec l'alliage liquide $Na_x K_{1-x}$ est réalisée en versant ledit alliage liquide sur le carbone dégazé.

Le procédé de préparation selon l'invention est sans doute le plus simple qu'on puisse envisager. Il a permis par exemple d'obtenir une quantité d'environ 400 g de composé en une seule fois, alors que les quantités de composés d'intercalation provenant de méthodes plus dures ne sont que de l'ordre de quelques grammes. Les composés préparés conviennent à l'industrie et présentent une causticité très acceptable : dans un volume de 1000 $m^3$, le taux d'hydroxydes reste nettement en deçà du seuil toléré.

Les composés d'intercalation de formule générale I peuvent être utilisés comme constituant d'une composition pyrotechnique.

Ils peuvent avantageusement faire l'objet d'utilisation pour le réchauffement de zones déterminées, telles que des pistes d'atterrissage ou des points sensibles d'usines de production, pour la protection de cultures contre le gel.

Influence de différents paramètres sur les qualités des composés d'intercalation

1. Nature et granulométrie du carbone

Les mesures effectuées sur du $KC_8$, avec des carbones d'origines différentes font apparaître la contribution de la nature et de la granulométrie du carbone sur les performances du produit :

Tableau 2

| Type de carbone/granulométrie | Chaleur de la réaction (J.g$^{-1}$) |
|---|---|
| Noir de gaz/13 nm | 4200 |
| Charbon de bois fin | 2500 |
| Graphite/< 5 $\mu$m | 2500 |
| Graphite/2 $\mu$m | 2000 |

On observe que la chaleur de la réaction de ces composés avec l'air est généralement nettement supérieure à la chaleur théorique obtenue pour KC$_8$, à savoir 2030 J.g$^{-1}$.

2.<u>Nature des alcalins</u>

Au niveau du procédé, il est particulièrement intéressant de travailler sur un mélange eutectique NaK, car celui-ci est liquide à température ambiante. Par ailleurs, les alcalins peuvent être approvisionnés sous deux formes, à savoir des alcalins purs, ou encore des alcalins conditionnés dans l'huile. Dès lors, deux nouveaux paramètres interviennent sur la qualité des composés d'intercalation, d'une part, et sur la durée du procédé, d'autre part. Il s'agit des pourcentages relatifs Na et K autour du point eutectique et du taux d'huile qui influencent les performances du matériau final.

a) Pourcentages relatifs sodium-potassium.
Les essais conduits autour du point eutectique, ont montré que l'enrichissement en sodium est légèrement favorable pour l'aspect thermogénèse, mais qu'il accélère grandement la cinétique d'oxydation, alors que l'enrichissement en potassium réduit légèrement la thermogénèse et donne des poudres plus collantes. L'alliage eutectique reste donc celui qui offre le meilleur compromis.
b) Influence du taux d'huile.
Il apparaît que l'augmentation du taux d'huile tend à augmenter la durée de combustion. Ainsi, lorsque les masses d'huile et de produit actif sont équivalentes, il n'y a plus de combustion visible, mais les flocons s'échauffent doucement.
Cependant, il faut noter qu'un taux d'huile important rend le matériau collant, ce qui est incompatible avec une bonne dispersion.
L'influence du taux d'huile varie avec la nature du carbone utilisé.

3. <u>Paramètres influents</u>

Le choix final du produit doit prendre en compte des impératifs différents. On trouvera dans le tableau suivant, les éléments du choix.
On rassemble ci-après les paramètres influents pour une propriété particulière visée et les valeurs qu'il est souhaitable de donner à ces paramètres selon les cas.

Tableau 3

| PROPRIETE VISEE | PARAMETRES INFLUENTS | CHOIX |
|---|---|---|
| Durée de la réaction | . Taux d'huile<br>. % relatif NaK<br>. Granulométrie du C | . ≤ 40 %<br>. 22 % de Na<br>. Plutôt gros |
| Instantanéité de la réaction | . Intrinsèque | . KC$_z$ ou NaKC$_z$ |
| Potentiel calorifique | . Stoechiométrie<br>. Granulométrie du C | . ≤ KC$_4$ (ou NaKC$_4$)<br>. Fin |

Tableau 3   (suite)

| PROPRIETE VISEE | PARAMETRES INFLUENTS | CHOIX |
|---|---|---|
| Nuage basse température | . Intrinsèque | . $KC_z$ ou $NaKC_z$ |
| Non toxicité | . Intrinsèque | . $KC_z$ ou $NaKC_z$ |
| Densité et retour à l'état initial | . Granulométrie du carbone<br>. Stoechiométrie<br>. Taux d'huile (dépendant du type de carbone) | . Très fin<br>. $NaKC_4$ - $NaKC_6$ |
| Dispersabilité | . Stoechiométrie<br>. Granulométrie du carbone<br>. Taux d'huile | . > $NaKC_z$<br>. Gros<br>. < 5 % |
| Résistance au vieillissement | . Taux d'huile<br>. Stoechiométrie | . < 30 %<br>. $\geq NaKC_4$ |
| Coût matière première | . Alcalins sous huile sous huile | . Alcalins sous . Alcalins sous huile |
| Fabrication simple | . Mélange NaK autour du point eutectique | . $\approx$ Point eutectique |

Dans ce tableau, "NaK" doit être considéré comme une écriture simplifiée de $Na_{0,32} K_{0,68}$.

L'invention pourra être mieux comprise à l'aide des exemples non limitatifs qui suivent et qui constituent des modes de réalisation préférentiels du composé selon l'invention.

Exemples

Exemple 1 : Chaleurs émises par divers composés $Na_{0,324}K_{0,676}C_z$.

On réalise différents composés de type $NaKC_z$ en utilisant le procédé selon l'invention.

On détermine, pour chaque composé, le potentiel calorifique. Ceux-ci sont rassemblés dans la liste ci-après :

| | |
|---|---|
| $Na_{0,324}K_{0,676}C_2$ (Sobrep®) | 6400 $J.g^{-1}$ |
| $Na_{0,324}K_{0,676}C_4$ (Graphite Carbone Lorraine®) | 4600 $J.g^{-1}$ |
| $Na_{0,324}K_{0,676}C_6$ (Graphite 10 $\mu$m) | 4000 $J.g^{-1}$ |
| $Na_{0,324}K_{0,676}C_4$ (Noir de gaz) | 4600 $J.g^{-1}$ |
| $Na_{0,324}K_{0,676}C_2$ (Charbon de bois) | 6400 $J.g^{-1}$<br>(jusqu'à 8000 $J.g^{-1}$). |

On a indiqué, dans cette liste, entre parenthèse, le carbone utilisé pour préparer chacun des composés.

On observe que les chaleurs émises par la combustion de ces divers composés est de l'ordre de 4000 à 8000 $J.g^{-1}$. Ces valeurs sont donc bien comprises dans la gamme souhaitée pour des composés destinés à des applications pyrotechniques.

Exemple 2 : Propriétés physiques de composés d'intercalation de polymères à base de $C_6H_4$.

On réalise un composé d'intercalation de polymère à base de $C_6H_4$. Son motif de base s'écrit :

$$C_6H_4 - CH_2 - C_6H_4.$$

En somme, il s'agit de deux noyaux benzéniques reliés entre eux par un groupement méthyle.

On intercale du sodium et du potassium, de préférence dans des proportions voisines de l'eutectique, dans ledit polymère.

On mesure certaines propriétés physiques des composés obtenus. Ces mesures sont réalisées pour des quantités variables de composés. La valeur moyenne du potentiel calorifique est de l'ordre de 2800 J/g.

On constate que le composé d'intercalation conforme à l'invention présente d'excellentes propriétés calorifiques, largement exploitables en pyrotechnie.

## Revendications

**1.** Composé d'intercalation de formule globale I

$$Na_x \ K_{1-x} \ Z_y \hspace{4cm} (I)$$

dans laquelle :

Z    représente du carbone ou un polymère à motif cyclique, en particulier aromatique, notamment un polymère dont le motif de base est $C_6H_4$ ;

$0 < x < 1$, et
$2 \leq y \leq 6$,

y    pouvant être entier ou non.

**2.** Composé selon la revendication 1, caractérisé en ce que Z représente du carbone.

**3.** Composé selon l'une des revendications 1 et 2, caractérisé en ce que
$0,15 \leq x \leq 0,70$.

**4.** Composé selon l'une des revendications 1 à 3, caractérisé en ce que
$3 \leq y \leq 5$.

**5.** Composé selon la revendication 4, caractérisé en ce que
$0,25 \leq x \leq 0,45$.

**6.** Composé selon la revendication 5, caractérisé en ce que x correspond à une valeur proche de l'eutectique dans le diagramme de phase Na-K.

**7.** Composé selon l'une des revendications 1 à 6, caractérisé par le fait que le carbone se présente sous forme de particules de granulométrie comprise entre $10^{-5}$ et 1 mm.

**8.** Procédé de préparation d'un composé d'intercalation selon l'une des revendications 1 à 7, caractérisé en ce qu'il comprend :

.    une étape de dégazage de la source carbonée Z, en particulier de carbone,
.    une étape de formation d'un alliage liquide $Na_x \ K_{1-x}$ par mise en contact des métaux Na et K sous forme solide à une température appropriée dictée par le diagramme de phase Na-K, en particulier à température ambiante, et sous atmosphère inerte, et
.    une étape de mise en contact de la source carbonée Z dégazée, en particulier du carbone dégazé, avec l'alliage liquide $Na_x \ K_{1-x}$, de préférence sous agitation, pour obtenir $Na_x \ K_{1-x} \ Z_y$, en particulier $Na_x \ K_{1-x} \ C_y$, sous atmosphère inerte et sans aucun apport extérieur de chaleur.

**9.** Procédé selon la revendication 8, caractérisé en ce que le carbone utilisé se présente sous forme de granules de diamètre compris entre 1 et 4 mm, de préférence entre 2 et 3 mm.

**10.** Procédé selon l'une des revendications 8 et 9, caractérisé en ce que l'étape de mise en contact du carbone dégazé avec l'alliage liquide $Na_x \ K_{1-x}$ est réalisée en versant ledit alliage liquide sur le carbone dégazé.

**11.** Utilisation d'un composé d'intercalation selon l'une des revendications 1 à 7, comme constituant d'une composition pyrotechnique.

**12.** Utilisation d'un composé d'intercalation selon la revendication 11, pour le réchauffement de zones déterminées, telles que des pistes d'atterrissage ou des points sensibles d'usines de production, pour la protection de cultures contre le gel.

**Claims**

**1.** Intercalation compound of overall formula I:

$$Na_xK_{1-x}Z_y \hspace{3cm} (I)$$

in which:

Z   represents carbon or a polymer with a cyclic unit, in particular an aromatic unit, especially a polymer in which the basic unit is $C_6H_4$;

$0 < x < 1$, and
$2 \leq y \leq 6$,

y   being able to be an integer or a non-integer.

**2.** Compound according to Claim 1, characterized in that Z represents carbon.

**3.** Compound according to either of Claims 1 and 2, characterized in that:
$0.15 \leq x \leq 0.70$.

**4.** Compound according to one of Claims 1 to 3, characterized in that
$3 \leq y \leq 5$.

**5.** Compound according to Claim 4, characterized in that
$0.25 \leq x \leq 0.45$.

**6.** Compound according to Claim 5, characterized in that x corresponds to a value close to the eutectic in the Na-K phase diagram.

**7.** Compound according to one of Claims 1 to 6, characterized in that the carbon is provided in the form of particles with a particle size of between $10^{-5}$ and 1 mm.

**8.** Process for the preparation of an intercalation compound according to one of Claims 1 to 7, characterized in that it comprises:

- a stage of degassing the carbonaceous source Z, in particular carbon,
- a stage of formation of an $Na_xK_{1-x}$ liquid alloy by bringing Na and K metals, in solid form, into contact at an appropriate temperature dictated by the Na-K phase diagram, in particular at room temperature, and under an inert atmosphere, and
- a stage of bringing the degassed carbonaceous source Z, in particular degassed carbon, into contact with the $Na_xK_{1-x}$ liquid alloy, preferably with stirring, in order to obtain $Na_xK_{1-x}Z_y$, in particular $Na_xK_{1-x}C_y$, under an inert atmosphere and without any external contribution of heat.

**9.** Process according to Claim 8, characterized in that the carbon used is provided in the form of granules with a diameter of between 1 and 4 mm, preferably between 2 and 3 mm.

**10.** Process according to either of Claims 8 and 9, characterized in that the stage of bringing the degassed carbon into contact with the $Na_xK_{1-x}$ liquid alloy is carried out by pouring the said liquid alloy over the degassed carbon.

11. Use of an intercalation compound according to one of Claims 1 to 7, as constituent of a pyrotechnic composition.

12. Use of an intercalation compound according to Claim 11, for heating specific areas, such as landing strips or sensitive parts of production plants, or for protecting crops from frost.

**Patentansprüche**

1. Intercalationsverbindung der allgemeinen Formel I

$$\textbf{Na}_x \ \textbf{K}_{1-x} \ \textbf{Z}_y \qquad\qquad (I),$$

in welcher:

Z   für Kohlenstoff oder ein Polymer mit zyklischer Struktur, im besonderen aromatischer Struktur, insbesondere ein Polymer, bei welchem die Basisstruktur $C_6H_4$ ist, steht;

  $0 < x < 1$ und
  $2 \leq y \leq 6$ ist, wobei

y   eine ganze Zahl sein kann oder nicht.

2. Verbindung nach Anspruch 1, dadurch gekennzeichnet, daß Z für Kohlenstoff steht.

3. Verbindung nach einem der Ansprüche 1 oder 2, dadurch gekennzeichnet, daß $0,15 \leq x \leq 0,70$ ist.

4. Verbindung nach einem der Ansprüche 1 bis 3, dadurch gekennzeichnet, daß $3 \leq y \leq 5$ ist.

5. Verbindung nach Anspruch 4, dadurch gekennzeichnet, daß $0,25 \leq x \leq 0,45$ ist.

6. Verbindung nach Anspruch 5, dadurch gekennzeichnet, daß x einem Wert nahe dem eutektischen in dem Na-K-Phasendiagramm entspricht.

7. Verbindung nach einem der Ansprüche 1 bis 6, dadurch gekennzeichnet, daß der Kohlenstoff in Form von Partikeln von einer Korngröße von $10^{-5}$ bis 1 mm vorliegt.

8. Verfahren zur Herstellung einer Intercalationsverbindung nach einem der Ansprüche 1 bis 7, dadurch gekennzeichnet, daß es umfaßt:

  -   einen Entgasungsschritt des kohlenstoffhaltigen Ausgangsstoffes Z, im besonderen von Kohlenstoff,
  -   einen Schritt zur Bildung einer flüssigen Legierung $Na_x \ K_{1-x}$ durch In-Kontakt-Bringen der Metalle Na und K in fester Form bei einer geeigneten Temperatur, vorgegeben durch das Na-K-Phasendiagramm, im besonderen bei Umgebungstemperatur, und in einem inerten Medium und
  -   einen Schritt des In-Kontakt-Bringens des kohlenstoffhaltigen, entgasten Ausgangsstoffes Z, im besonderen von entgastem Kohlenstoff, mit der flüssigen Legierung $Na_x \ K_{1-x}$, vorzugsweise mit Rühren, um $Na_x \ K_{1-x} \ z_y$ zu erhalten, im besonderen $Na_x \ K_{1-x} \ C_y$, in inertem Medium und ohne jede externe Zufuhr von Wärme.

9. Verfahren nach Anspruch 8, dadurch gekennzeichnet, daß der verwendete Kohlenstoff in Form von Granulat eines Durchmessers von 1 bis 4 mm, vorzugsweise von 2 bis 3 mm, vorliegt.

10. Verfahren nach einem der Ansprüche 8 oder 9, dadurch gekennzeichnet, daß der Schritt des In-Kontakt-Bringens von entgastem Kohlenstoff mit der flüssigen Legierung $Na_x \ K_{1-x}$ beim Übergießen der vorgenannten flüssigen Legierung über den entgasten Kohlenstoff erfolgt.

11. Verwendung einer Intercalationsverbindung nach einem der Ansprüche 1 bis 7 als Bestandteil einer pyrotechnischen Zusammensetzung.

12. Verwendung einer Intercalationsverbindung nach Anspruch 11 für die Erwärmung von bestimmten Bereichen, wie von Landebahnen oder von empfindlichen Stellen von Fabrikationsanlagen, für den Schutz von Kulturen gegen Frost.

% Massique Na

FIG.1A

% Atomique Na

FIG.1B